Europäisches Patentamt

European Patent Office

Office européen des brevets

(11) Publication number: **0 326 353**
A2

# (12) EUROPEAN PATENT APPLICATION

(21) Application number: **89300698.1**

(22) Date of filing: **25.01.89**

(51) Int. Cl.⁴: **B 60 T 17/08**

(30) Priority: **27.01.88 GB 8801790**

(43) Date of publication of application:
**02.08.89 Bulletin 89/31**

(84) Designated Contracting States:
**CH DE ES FR IT LI SE**

(71) Applicant: **WESTINGHOUSE BRAKE AND SIGNAL HOLDINGS LIMITED**
**Pew Hill**
**Chippenham Wiltshire (GB)**

(72) Inventor: **Langley, Keith Williams**
**11 Bennetts Road**
**Swainswick Bath Avon (GB)**

(74) Representative: **MacFarlane, John Anthony Christopher et al**
**PAGE & CO Temple Gate House Temple Gate**
**Bristol BS1 6PL (GB)**

(54) Spring-applied brake actuator.

(57) A spring-applied brake actuator has an output member (20) movable from a "brake released" position to a "brake applied" position in which an output braking force can be applied through the output member (20), and a braking force generating spring (5) for generating the output braking force to be applied to the output member (20) when in its "brake-applied" position. The output member (20) is constituted by a piston and there is provided first means (8/10) for applying a fluid pressure such that the spring (5) is withheld from generating said output braking force in the "brake released applied" condition of the actuator, and second means (11/13/16/22/23/24) for applying this fluid pressure to the output member (20) to move it into its "brake applied" position before the braking force generating spring (5) is allowed to generate the output braking force to be applied through the output member (20).

FIG.1.

## Description

1

### SPRING-APPLIED BRAKE ACTUATOR

This invention relates to brake actuators of the type conventionally known as "spring-applied brake actuators".

In such actuators the braking force is generated by a heavy spring the force of which, in the "brake applied" condition of the actuator, is applied through an output member. A problem of these actuators is that, conventionally, the spring not only has to generate the braking force but it also has to move the output member from its "brake released" position to its "brake applied" position. The spring necessarily having to be a high rate spring to be able to generate a force of the magnitude of a braking force, it has to be undesirably long to accommodate the movement of the output member to its "brake applied" position and still, when the member is in that position, to generate an effective braking force for transmission through the output member. Particularly with actuators of restricted overall envelope, the necessary size of the spring to perform both of these functions poses a substantial, if not insurmountable, problem.

According to the present invention there is provided a spring-applied brake actuator having an output member movable from a "brake released" position to a "brake applied" position in which an output braking force can be applied through the output member, and a braking force can be applied through the output member, and a braking force generating spring for generating the output braking force to be applied to the output member when in its "brake-applied" position, characterised in that the output member is constituted by a piston and there is provided first means for applying a fluid pressure such that the spring is withheld from generating said output braking force in the "brake released" condition of the actuator, and second means for applying this fluid pressure to the output member to move it into its "brake applied" position before the braking force generating spring is allowed to generate the output braking force to be applied through the output member.

For a better understanding of the invention and to show how the same may be carried into effect, reference will now be made, by way of example, to the accompanying drawings, in which:-

Figure 1 is a cross-sectional view of a spring-applied brake actuator, shown in its "brake released" condition; and

Figure 2 is a part cross-sectional view of the actuator shown in its "brakes applied" condition before the spring has started to generate a brake-applying force.

The actuator which will now be described is for fitting to a so-called tread-brake unit such as is described in co-pending patent applications claiming priority from British Patent Applications 8801791 (filed 27 January 1988), 8801793 (filed 27 January 1988) and 8815373.9 (filed 28 June 1988), and 8815374.7 (filed 28 June 1988).

The actuator has a housing 1 having at its right hand end (as viewed in the Figures) a bore 2 to accept a trunnion to fit the actuator to the tread-brake unit described in the co-pending patent applications referred to above.

The left-hand end (as viewed in the Figures) of the housing 1 constitutes a cylinder 3 within which is slidable a multi-part piston 4 urged to the left (as viewed in the Figures) by a braking force generating spring 5. Within a tubular extension 6 of the piston 4 is a bore 7 which provides communication from a first chamber 8, between the piston 4 and an end wall 9 of the housing 1, and a second chamber 10 remote from the chamber 8.

Within the tubular extension 6 of the piston 4 is located a spring 11 which, via a first thrust bearing 12, resiliently loads a multi-start threaded nut 13. On the opposite side of the nut 13 is a second thrust bearing 14 located between the nut 13 and an inner piston 16 slidable within the tubular extension 6 of the piston 4 and forming therewith the chamber 10. The inner piston 16 has extending radially therethrough bores 17 which provide communication from the chamber 10 to the internal wall of the piston 16 between a pair of seals 18.

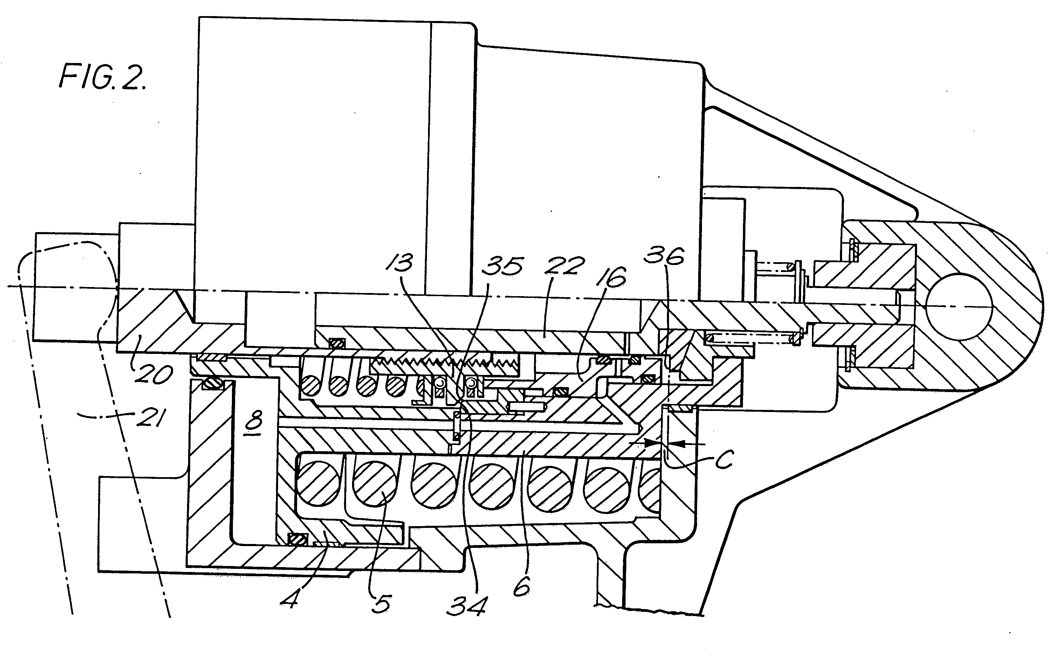

The nut 13 is screw-threadedly engaged with the exterior of a tubular extension 19 of an output member 20 which is constituted by a piston. The nut 13 constitutes a coupling member that can mechanically connect the piston 4 to the output member 20. The left-hand end (as viewed in the Figures) of the output member 20 has therein a vertical transverse slot (not shown) engageable with a parking brake lever 21 (Figure 2) which is a lever to be found in the tread brake unit described in the co-pending patent applications referred to above. Slidable in the output member 20 is a hollow spool-piston 22 which has, extending through its wall, a passageway formed by a bore 23 which provides communication from the exterior of the spool-piston 22 to a chamber 24 that is within both the output member 20 and the spool-piston 22.

The actuator, as so far described, operates as follows:-

### RELEASE CONDITION

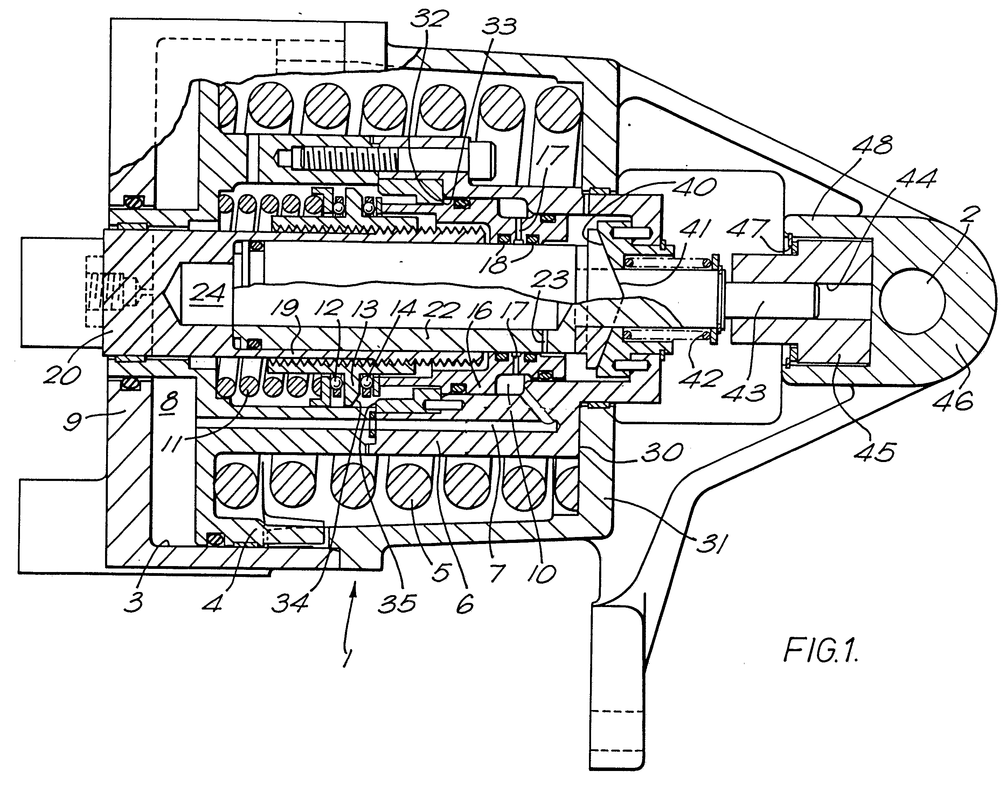

The actuator as shown in Figure 1 is in its "brake released" condition. In this condition, the chambers 8 and 10 are both fully-charged with air pressure derived from a conventional supply reservoir via an inlet port (not shown) in the housing 1. In this fully-charged condition, the pressure in the chamber 8 serves to overcome the spring 5 and thus holds the piston 4 in its position shown in Figure 1 in which a shoulder 30 on the tubular extension 6 of the piston 4 abuts the right-hand (as viewed in the Figure) end wall 31 of the housing 1. The pressure in the chamber 10 holds the inner piston 16 in its position shown in which a shoulder 32 thereof abuts a complementary shoulder 33 on the internal wall of the tubular extension 6 of the piston 4. To achieve this, the pressure in the chamber 10 overcomes the spring 11 and, by the overcoming of this spring 11, the nut 13 has been spun on its threaded engagement with the output member 20 (between its thrust bearings 12 and 14) to its position as shown in Figure 1. In this position of the nut 13, a chamfered shoulder 34 on the nut 13 is disengaged and spaced from a complementary shoulder 35 on the interior wall of the tubular extension 6 of the piston 4.

With the spring 5 both held compressed by the pressure in chamber 8 and held disengaged from mechanical connection with the output member 20, the spring 5 is withheld from generating an output braking force on the output member 20. The brake is held "released" by conventional external brake-release springs (not shown). These springs hold the output member 20 and the spool-piston 22 in their relative positions shown in Figure 1 in which the left-hand (as viewed in the Figure) end of the spool-piston 22 abuts the internal end wall of the output member 20.

## MOVEMENT TO "BRAKE ENGAGED" CONDITION

If, from the condition illustrated in Figure 1, the pressure in the chambers 8 and 10 starts to drop-either by operation of a suitable control valve (not shown) or by leakage from a supply reservoir which is not replenished by virtue of the vehicle being decoupled and, therefore, disconnected from a compressor - this drop in pressure firstly allows the spring 11 to overcome the reduced pressure in chamber 10 and spin the nut 13 along its threaded engagement with the output member 20 - the nut 13 being freely supported between its thrust bearings 12 and 14. As the nut 13 moves rightward (as viewed in the Figures) it carries the piston 16 equally rightwards and, eventually, causes the righthand of the two seals 18 to pass over the outer end of the bore 23. When this happens, pressure from the chamber 10 is free to exhaust into and, therefore pressurise, the chamber 24. Pressurisation of the chamber 24 extends the output member 20 relative to the spool-piston 22 against the action of the brake release springs (not shown) to move the brake into its "brake applied" position in which the brake is just, but only just, applied with all previous clearance now taken up.

After the above operation, the actuator is in its condition shown in Figure 2 from which it can be seen that there is a clearance C between the right-hand (as viewed in the Figure) end of the piston 16 and an external shoulder 36 of the spool-piston 22. Also, as again can be seen, although the nut 13 has been spun along the output member 20 there still remains a small gap between the shoulders 34 and 35 on the nut 13 and the tubular extension 6 respectively.

## APPLICATION OF BRAKING FORCE

Further drop of the pneumatic pressure allows the braking force generating spring 5 to overcome the reducing force now being exerted from the chamber 8 on the piston 4. Hence, the piston 4 moves to the left (as viewed in the Figures) under the increasing influence of the now-released spring 5. As soon as the piston 4 has moved a sufficient (small) distance the shoulder 35 on the interior of the tubular extension 6 of the piston 4 engages the shoulder 34 on the nut 13. Such engagement clutches the nut 13 to the piston 4 and prevents the nut 13 from then rotating. As the nut 13 cannot now rotate, the increasing braking force being generated by the spring 5 with further reduction of pressure in the chamber 8 is transmitted via the nut 13 to the output member 20 to cause it to apply this increasing braking force to the previously-engaged brake until, eventually, the pressure in the chamber 8 has reduced to atmospheric and the spring 5 is thereby allowed to generate the maximum braking force.

It will be seen that the spring 5 is required to extend a distance which is only the sum of the distance required finally to clutch the nut 13 to the piston 4 and to take up any "stretch" in the braking system under the increasing braking force. It is not required to extend a distance corresponding to the brake clearance as this as previously been taken up by pressurisation of the chamber 24. Thus, the spring 5 can be significantly shorter than would otherwise be required.

## PNEUMATIC BRAKE RELEASE

The brake is released by re-pressurising the chambers 8 and 10 via the port (not shown) in the housing 1. Such re-pressurisation causes operation of the various parts in, generally, the reverse order to that for a brake application.

## MANUAL RELEASE

To provide a manual release facility, the internal end wall of the tubular extension 6 of the piston 4 is provided with a face cam 40 engaged by a complementary face cam 41 on the spool-piston 22. These face cams 40 and 41 are held engaged by a spring 42. The right-hand (as viewed in the Figures) extremity of the spool-piston 22 is provided with an extension 43 of square cross-section which projects into a complementary-shaped bore 44 in a member 45 rotatable in a head 46 of the housing 1. This member 45 is usually located in the head 46 by a circlip 47. The member 45 has a hex-shaped portion 48 engageable by a spanner for rotating the member 45. It will be appreciated that, by such rotation, the spool-piston 22 will be rotated so that, by virtue of the face cams 40 and 41, the piston 16 can be moved to the left (in the Figures) by the shoulder 36 to thrust against the nut 13 via the thrust bearing 14 to break the clutch 34 and 35. In this condition the nut 13 is able to spin under the influence of the release springs (not shown). Movement of the output member 20 rightwards (in the Figures) continues until the release position is achieved. The spring 42 is provided to ensure that the member 45 returns to its release position when the hex-shaped portion 48 is released by the spanner.

When the member 45 is subsequently released, the spring 42 re-extends to restore the previously-moved parts to their original positions.

**Claims**

1. A spring-applied brake actuator having an output member (20) movable from a "brake released" position to a "brake applied" position in which an output braking force can be applied through the output member (20), and a braking force generating spring (5) for generating the output braking force to be applied to the output member (20) when in its "brake-applied" position, characterised in that the output member (20) is constituted by a piston and there is provided first means (8/10) for applying a fluid pressure such that the spring (5) is withheld from generating said output braking force in the "brake released" condition of the actuator, and second means (11/13/16/212/23/24) for applying this fluid pressure to the output member (20) to move it into its "brake applied" position before the braking force generating spring (5) is allowed to generate the output braking force to be applied through the output member (20).

2. An actuator as claimed in claim 1, wherein said first means comprises a first chamber (8) defined by a further piston (4) that is acted upon by the spring (5) and a housing (1) in which this piston (4) is mounted, and a second chamber (10) that is open to the first chamber (8), pressure prevailing in the first chamber (8) in said "brake released" condition serving to overcome the spring (5) with pressure prevailing in the second chamber (10) serving to hold in disengaged condition a coupling member (13) of said second means, this coupling member in engaged condition serving mechanically to connect the further piston (4) with the output member (20).

3. An actuator as claimed in claim 2, wherein the coupling member is a nut (13) that is screw-threadedly engaged with the output member (20) for movement from and to said disengaged condition to and from said engaged condition, the nut (13) being biassed to move, upon reduction of pressure in the second chamber (10) into said engaged condition.

4. An actuator as claimed in claim 3, wherein said second means further comprises an inner piston (16) movable within the further piston (4), a spool-piston (22) movable in the output member (20), a further chamber (24) that is within both the output member (20) and the spool-piston (22), and a passageway (23) communicating the exterior of the spool-piston (22) to the further chamber (24), the nut (13) being connected to move the inner piston (16) as the nut (13) moves into said engaged condition to open the second chamber (10) via the passageway (23) to the further chamber (24), pressurisation of the further chamber then serving to move the output member (20) to its "brake applied" position.

5. An actuator as claimed in claim 3 or 4, wherein there is a clutch arrangement (34/35) between the nut (13) and the further piston (4), movement of the further piston (4) effected by action of the braking force generating spring (5) permitted by drop of pressure in the first chamber (8) serving to engage this clutch arrangement (34/35) to prevent rotation of the nut (13) relative to the further piston (4) whereby the nut (13) is placed in said engaged condition in which it serves mechanically to connect the further piston (4) with the output member (20).

6. An actuator as claimed in claims 4 and 5, wherein cam faces (40 and 41) carried by the spool-piston (22) and the further piston (4) are resiliently biased into engagement with one another, and wherein the spool-piston (22) has a portion (43) that is engageable for manually rotating the spool-piston (22) whereby, in the condition that the braking force generating spring (5) is applying its maximum braking force to the output member (20), the output member (20) can be moved to its "brake released" position by manually rotating the spool-piston (22), the relative rotation thus effected between the engaged cam faces (40 and 41) bringing about movement of the inner piston (16) to break the clutched engagement of the nut (13) with the further piston (4) to permit the movement of the output member (20).

FIG1.

FIG.2.